# EUROPÄISCHE PATENTANMELDUNG

(11) **EP 1 214 999 A2**
(43) Veröffentlichungstag der Anmeldung: **19.06.2002**
(21) Anmeldenummer: 01130031.6
(22) Anmeldetag: 18.12.2001
(51) Int. Cl.: B22D 17/22, B29C 45/67

(54) **Vorrichtung zum Zusammenhalten eines Formwerkzeugs**

(30) Priorität: 18.12.2000 DE 10063133
(71) Anmelder: Heinrich Greve Maschinen- und Apparatebau GmbH & Co. KG, 32312 Lübbecke (DE)
(72) Erfinder: Greve, Heinrich, 32312 Lübbecke (DE)
(74) Vertreter: Engelmann, Kristiana, Dipl.-Ing.

(57) **Zusammenfassung**

Bei einer Vorrichtung zum Zusammenhalten eines geteilten Formwerkzeugs (6, 7) mit zumindest zwei die Teile (6, 7) des Formwerkzeugs tragenden Formträgern (2, 3), die mittels wenigstens eines Halteelements (9), z.B. einer Klammer, zusammengedrückt werden, und mit zumindest einem Druckzylinder (11), insbesondere Hydraulikzylinder, zum Aufbau der Haltekraft wird erfindungsgemäß die Haltekraft über eine Hebelübersetzung aufgebracht. Diese hat eine Hebelanordnung mit wenigstens einem zweiarmigen Schwenkhebel (16), dessen einer Hebelarm (19) auf den Formträger (2, 3) wirkt, während an dem anderen Hebelarm (20) direkt oder indirekt der Druckzylinder (11) angreift. Es kann auch eine Kniehebelanordnung vorgeschaltet sein.

## Beschreibung

Die Erfindung betrifft eine Vorrichtung zum Zusammenhalten eines geteilten Formwerkzeugs, wie z.B. einer Spritzgußform, nach dem Oberbegriff des Anspruchs 1.

Derartige Vorrichtungen, wie beispielsweise in der DE 3025189 A1 beschrieben, dienen dem Zusammenhalten des Formwerkzeugs insbesondere während eines Einfüllvorgangs, der besonders bei Spritzgußformen unter hohem Druck stattfindet. Sie müssen daher eine hohe Haltekraft aufbringen. Bei herkömmlichen Vorrichtungen sind die Teile des Formwerkzeugs auf Formträgern fest montiert und die Formträger werden mittels Klammern, die in der Teilungsebene um die Formträger herum angeordnet sind, mit einer hohen Haltekraft zusammengedrückt. Diese Haltekraft wird durch Druckzylinder, in der Regel Hydraulikzylinder, erzeugt, die an den Klammern angeordnet sind und direkt quer zur Teilungsebene auf die Formträger wirken. Die Größe des Formwerkzeugs und damit der Formträger setzt der Anzahl der verwendeten Halteelemente und der die Haltekraft erzeugenden Hydraulikzylinder Grenzen. In der Regel müssen daher Hydraulikzylinder mit einem Arbeitsdruck von 300 bar verwendet werden. Eine mit 300 bar beaufschlagte Hydraulik benötigt aber Sonderbauteile, die dementsprechend teuer sind.

Die Erfindung befaßt sich daher mit dem Problem, eine gattungsgemäße Vorrichtung zum Zusammenhalten von Formwerkzeugen anzugeben, die hinsichtlich der Aufbringung der Haltekraft günstiger ist und insbesondere mit niedrigeren Drücken betrieben werden kann.

Dieses Problem wird erfindungsgemäß durch eine Vorrichtung mit den Merkmalen des Anspruchs 1 gelöst.

Durch das Vorsehen einer Hebelübersetzung, über die die Haltekraft aufgebracht wird, können die Druckzylinder mit geringerem Druck beaufschlagt oder geringer dimensioniert werden und es wird dennoch die gleiche Haltekraft erreicht, wie bei einer herkömmlichen Vorrichtung. Die gesamte Vorrichtung wird dadurch preiswerter und weniger störanfällig. Das Halteelement ist dazu so ausgebildet, daß es die für die Hebelübersetzung erforderliche Hebelanordnung mit wenigstens einem zweiarmigen Schwenkhebel aufweist, wobei ein Hebelarm des Schwenkhebels direkten Druck auf den Formträger ausübt, während an dem anderen Hebelarm der Druckzylinder direkt oder indirekt angreift. Für eine mechanisch möglichst einfache aber stabile Ausführung ist der Druckzylinder dabei zwischen dem Haltearm und dem anderen, dem Formträger abgewandten Hebelarm des Schwenkhebels angeordnet.

Weitere Vorteile und Einzelheiten ergeben sich aus zwei in den Figuren dargestellten Ausführungsbeispielen der Erfindung, die im folgenden zusammen mit einem Beispiel für den gattungsgemäßen Stand der Technik erläutert werden; es zeigen:
- Fig. 1: eine Vorrichtung zum Zusammenhalten eines Formwerkzeugs nach dem Stand der Technik,
- Fig. 2: eine Teildarstellung einer erfindungsgemäß ausgebildeten Vorrichtung zum Zusammenhalten eines Formwerkzeugs und
- Fig. 3: den Gegenstand aus Fig. 2 in einer anderen Ausführungsform.

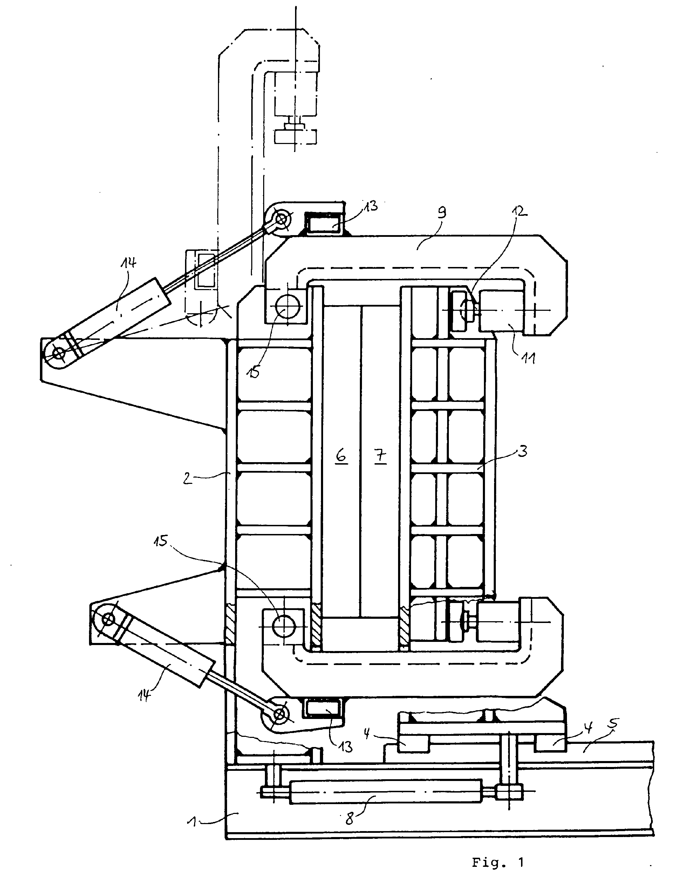

In Fig. 1 ist die Seitenansicht einer gattungsgemäßen Vorrichtung nach dem Stand der Technik dargestellt. Auf einem Grundgestell 1 sind zwei Formträger 2, 3 angeordnet, wobei der linke Formträger 2 fest mit dem Grundgestell 1 verbunden ist, wohingegen zum Öffnen der rechte Formträger 3 mit Gleitschuhen 4 ausgestattet ist, über die sich der Formträger 3 auf einer Gleitschiene 5 des Grundgestells 1 verschieben läßt. Dadurch lassen sich die beiden Teile eines Formwerkzeugs 6, 7, die jeweils mit einem Formträger 2, 3 fest verbunden sind, auseinander bewegen, um ein fertiggestelltes Werkstück aus der Form 6, 7 zu entnehmen. Das Verschieben des rechten Formträgers 3 erfolgt über einen Hydraulikzylinder 8, der zum einen am Grundrahmen 1 und zum anderen am verschiebbaren Träger 3 angelenkt ist.

In Fig. 1 ist jedoch der geschlossene Zustand der Vorrichtung dargestellt, wobei die beiden Formträger 2, 3 über Halteelemente 9 in Form von Klammern zusammengedrückt werden. Bei der gezeigten Ausführungsform sind nur oberhalb und unterhalb des Formwerkzeugs 6, 7 Halteelemente 9 eingezeichnet. Tatsächlich befinden sich jedoch auch nicht dargestellte Halteelemente an den Formwerkzeugseiten. An jedem Halteelement 9 ist ein Hydraulikzylinder 11 angebracht, der mit seinem kugelig gelagerten Stempel 12 die Haltekraft direkt auf den rechten Formträger 3 aufbringt. Jeweils vier Halteelemente 9 sind senkrecht zur Zeichenebene über eine Traverse 13 miteinander zu einer Einheit verbunden. An der Traverse 13 greifen jeweils Hydraulikzylinder 14 an, die zum Öffnen des Formwerkzeugs 6, 7 die Halteelemente 9 um die Achsen 15 verschwenken, z.B. in die für das obere Halteelement 9 strichpunktiert angedeutete Position. Die unteren Halteelemente 9 und die nicht dargestellten seitlichen Halteelemente schwenken in der Regel nur so weit aus, daß der verschiebbare Formträger 3 frei ist.

Bei der in Fig. 1 dargestellten Vorrichtung sind an jeder Seite vier, d.h. insgesamt 16 Halteelemente 9 vorhanden, die mit einem Hydraulikkolbendurchmesser von 200 mm und einem Arbeitsdruck von 300 bar eine Gesamthaltekraft von 1.500.000 kp aufbringen. Ein Arbeitsdruck von 300 bar für die Hydraulikzylinder kann nur mit teuren Sonderbauteilen erreicht werden.

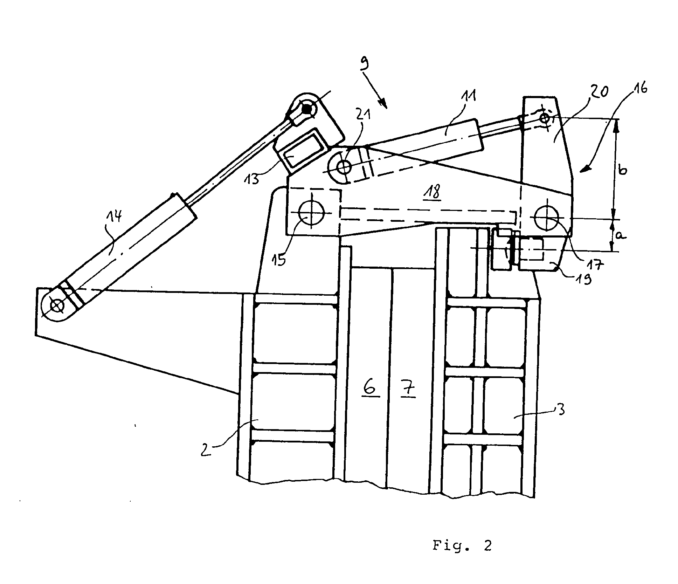

In Fig. 2 ist ein Teil einer Vorrichtung entsprechend Fig. 1, jedoch in einer erfindungsgemäßen Ausführungsform dargestellt, wobei das Halteelement 9 einen Schwenkhebel 16 aufweist, der um einen Drehpunkt 17 an einem Haltearm 18 des Halteelements 9 schwenkbar gelagert ist. Der eine Hebelarm 19 des Schwenkhebels 16 wirkt direkt auf den Formträger 3 ein. An dem anderen Hebelarm 20 des Schwenkhebels 16 greift der die Haltekraft aufbringende Hydraulikzylinder 11 an, dessen Kraft durch den Schwenkhebel 16 mit den eingezeichneten Hebelarmlängen a, b im Verhältnis b/a verstärkt wird. Bei der dargestellten Ausführungsform beträgt dieses Verhältnis b/a = 2,6, so daß die erforderliche Haltekraft von 1,5 Mio kp über 16 Hydraulikzylinder mit einem Kolbendurchmesser von 150 mm und einem Arbeitsdruck von 210 bar aufgebracht werden kann. Bei dem Arbeitsdruck von 210 bar handelt es sich um einen Normaldruck, für den keine teuren Sonderbauteile erforderlich sind.

Wenn der Hydraulikzylinder 11 wie dargestellt einerseits direkt an dem dem Formträger 3 abgewandten Hebelarm 20 des Schwenkhebels 16 und andererseits mit seinem entgegengesetzten Ende direkt an dem Haltearm 18 angelenkt ist, kann damit eine stabile und wenig wartungsanfällige Konstruktion verwirklicht werden. Außerdem können dadurch empfindliche Hydraulikbauteile von den Formträgern 2, 3 und dem Formwerkzeug 6, 7 weg verlagert werden und werden so der ungünstigen Hitzeeinwirkung von dem teilweise sehr heiß werdenden Formwerkzeug 6, 7 nicht mehr ausgesetzt. Die dargestellte Ausführungsform hat zudem den Vorteil, daß der Haltearm 18 in seinem das Formwerkzeug 6, 7 übergreifenden Bereich nur auf Zug und nicht auf Biegung beansprucht wird, da die Verbindungspunkte 17, 21 mit dem Schwenkhebel 16 und mit dem Hydraulikzylinder 11 im Bereich der äußersten Enden des Haltearms 18 angeordnet sind. Der Haltearm 18 kann daher entsprechend kleiner dimensioniert und ausgelegt werden, als es bei einem auch auf Biegung beanspruchten Element nötig wäre.

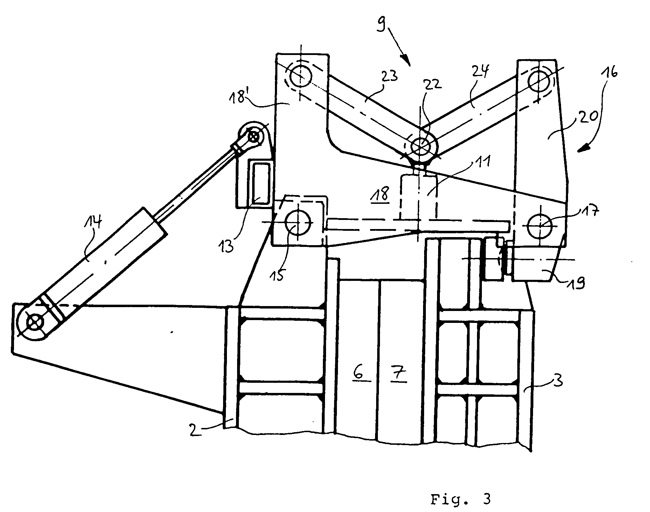

Fig. 3 zeigt eine weitere erfindungsgemäße Ausführungsform, wobei der Hydraulikzylinder 11 nicht unmittelbar auf den Schwenkhebel 16 einwirkt, sondern eine Kniehebelanordnung zwischengeschaltet ist. Diese besteht auf mechanisch einfache und hinsichtlich der wirkenden Kräfte günstige Weise aus zwei mit einem Gelenk 22 verbundenen Schwenkstangen 23, 24, von denen eine 23 an einem rechtwinklig nach oben verlängerten Ende 18' des Haltearms und die andere 24 an dem dem Formträger 3 abgewandten Hebelarm 20 des Schwenkhebels 16 befestigt ist. Der Hydraulikzylinder 11 greift dabei an dem die Schwenkstangen 23, 24 verbindenden Gelenk 22 an und steht bei der dargestellten Ausführungsform senkrecht. Bei dieser Ausführungsform kann der Arbeitsdruck und der Durchmesser der Hydraulikzylinder 11 gegenüber der in Fig. 2 dargestellten Version bei gleichbleibender Haltekraft noch erheblich verkleinert werden.

Die erfindungsgemäßen Vorrichtungen bieten daher die Möglichkeit, mit verhältnismäßig geringem, zumindestens im Normbereich angesiedeltem Druck arbeitende Druckzylinder einzusetzen und zugleich das sichere Zusammenhalten der Formträger bzw. der Teile des Formwerkzeugs zu gewährleisten. Eine erfindungsgemäße Vorrichtung ist daher preiswerter als die Vorrichtungen des Standes der Technik und zudem stabiler und weniger wartungsanfällig.

## Patentansprüche

1. Vorrichtung zum Zusammenhalten eines geteilten Formwerkzeugs (6, 7) mit zumindest zwei die Teile (6, 7) des Formwerkzeugs tragenden Formträgern (2, 3), die mittels wenigstens eines Halteelements (9), z.B. einer Klammer, zusammengedrückt werden, und mit zumindest einem Druckzylinder (11), insbesondere Hydraulikzylinder, zum Aufbau der Haltekraft, **dadurch Gekennzeichnet, daß** das Halteelement eine Hebelanordnung mit wenigstens einem zweiarmigen Schwenkhebel (16) aufweist, dessen einer Hebelarm (19) auf den Formträger (2, 3) wirkt, während an dem anderen Hebelarm (20) direkt oder indirekt der Druckzylinder (11) angreift.

2. Vorrichtung nach Anspruch 1, **dadurch gekennzeichnet, daß** das Halteelement einen Haltearm (18) aufweist, an dem der Schwenkhebel (16) verschwenkbar festgelegt ist, und der Druckzylinder (11) zwischen dem Haltearm (18) und dem anderen Hebelarm (20) des Schwenkhebels (16) angeordnet ist.

3. Vorrichtung nach Anspruch 2, **dadurch gekennzeichnet, daß** der Druckzylinder (11) mit seinem einen Ende an dem Haltearm (18) und mit seinem anderen Ende an dem anderen Hebelarm (20) des Schwenkhebels (16) angelenkt ist.

4. Vorrichtung nach Anspruch 2, **dadurch gekennzeichnet, daß** zwischen den Druckzylinder (11) und den Schwenkhebel (16) eine Kniehebelanordnung zwischengeschaltet ist.

5. Vorrichtung nach Anspruch 4, **dadurch gekennzeichnet, daß** die Kniehebelanordnung aus zwei mit einem Gelenk (22) verbundenen Schwenkstangen (23, 24) besteht, von denen eine (23) an dem Haltearm und eine (24) an dem Schwenkhebel (16) befestigt ist, und der Druckzylinder (11) an dem die Schwenkstangen (23, 24) verbindenden Gelenk (22) angeift.

6. Vorrichtung nach einem der Ansprüche 2 bis 5, **dadurch gekennzeichnet, daß** die Verbindungen von Haltearm (18), Schwenkhebel (16) und Druckzylinder (11) so angeordnet sind, daß im Haltearm (18) zumindest im wesentlichen nur Zugkräfte auftreten.
